# EUROPÄISCHE PATENTSCHRIFT

(11) **EP 0 540 013 B1**
(45) Veröffentlichungstag und Bekanntmachung des Hinweises auf die Patenterteilung: **22.05.1996**
(21) Anmeldenummer: 92118567.4
(22) Anmeldetag: 30.10.1992
(51) Int. Cl.: C06D 5/08, C06B 47/00

(54) **Gasentwickelndes Material**
Gas generator using liquified gas
Générateur de gaz à base de gaz liquéfié

(30) Priorität: 30.10.1991 DE 4135776
(43) Veröffentlichungstag der Anmeldung: 05.05.1993
(73) Patentinhaber: Dynamit Nobel Aktiengesellschaft, D-53839 Troisdorf (DE)
(72) Erfinder: Hagel, Rainer, Dr., W-8520 Erlangen (DE); Brede, Uwe, W-8510 Fürth (DE)

(56) Entgegenhaltungen:
- R.J. MEYER ET AL. 'Gmelins Handbuch der anorganischen Chemie.' 1975 , SPRINGER VERLAG , BERLIN Lief. 3., Systemno. 4. , ed. 8.,
- R. DUBRISAY ET AL. 'Nouveau Traité de Chimie minérale. Tome X; Azote Phosphore.' 1956 , MASSON ET CIE, EDITEURS , PARIS
- CHEMICAL ABSTRACTS, vol. 68, no. 12, 18. M rz 1968, Columbus, Ohio, US; abstract no. 51469w, M. DESTRIAU ET AL. 'Heterogeneous processes in the combustion of gaseous mixtures.' Seite 5001 ;

## Beschreibung

Die Erfindung betrifft ein gasentwickelndes Material für einen Gasgenerator, insbesondere für ein aufblasbares Aufprallkissen zum Schutz eines Kraftfahrzeug-Insassen vor Verletzungen, das aus einem Flüssiggasgemisch besteht.

Bei den derzeit verwendeten Gasgeneratoren für aufblasbare Aufprallkissen (auch "Airbag" genannt) wird als brennbares gasentwickelndes Material ein Filterladungssatz in Tabletten- oder Scheibenform verwendet. Beim Zünden erzeugt dieser Gassatz das Nutz- oder Druckgas zum Aufblasen des Aufprallkissens. Der Nachteil bei der Verbrennung fester gasentwickelnder Materialien besteht in dem recht hohen bei der Verbrennung entstehenden Schlackenanteil, der mehr als 50% der eingesetzten Gassatzmasse ausmacht. Aufgrund der Schlacke- und Staubbildung bei der Verbrennung sind aufwendige Filterstufen im Gasgenerator erforderlich, um Schlacke- und Staubpartikel zurückzuhalten. Andernfalls würde beim Austritt dieser Partikel das Aufprallkissen beschädigt und die Insassen in Gefahr gebracht werden können.

Als Alternative zu Feststoffen enthaltenden existieren Generatoren mit komprimierten Gasen oder Luft. Zur Bildung eines ausreichenden Gasvolumens sind sehr hohe Ladedrücke erforderlich, da beim Abströmen der Gase eine Abkühlung stattfindet und kein Volumengewinn durch exotherme Reaktionen wie bei Feststoffmischungen erzielt wird.

Der Erfindung liegt die Aufgabe zugrunde, ein gasentwickelndes Material für einen Gasgenerator, insbesondere für ein aufblasbares Aufprallkissen zum Schutz eines Kraftfahrzeug-Insassen vor Verletzungen bereitzustellen, bei dem Schlackerückhalteeinrichtungen nicht erforderlich sind sowie seine Verwendung in einem Gasgenerator für aufblasbare Aufprallkissen. Darüber hinaus soll als gasentwickelndes Material Flüssiggas eingesetzt werden, das bei Zündung kontrolliert in den Verbrennungsraum hineingelangt und in diesem verbrennt.

Die Lösung der vorgenannten Aufgabe besteht in einem Flüssiggasgemisch als gasentwickelndes Material, wobei es sich bei dem Flüssiggas um ein Material handelt, das unter Normalbedingungen (Zimmertemperatur und Normaldruck) im gasförmigen Aggregatzustand vorliegt und aufgrund des Drukkes, unter dem es im Vorratsraum steht, verflüssigt ist. Dieses unter Druck stehende Flüssiggas wird kontrolliert in den zum Vorratsraum benachbarten Verbrennungsraum des Gasgenerators eingespritzt. Kurz vor bzw. mit dem Einlaß des Flüssiggasgemisches in den Verbrennungsraum wird eine Anzündvorrichtung mit einer Anzündladung gezündet. Als Anzündladung kann beispielsweise ein explodierender Draht oder eine partikelreiche, heiße Flamme verwendet werden. Die Anzündschwaden und heißen Verbrennungsgase entzünden das Flüssiggasgemisch, das aufgrund der auftretenden Expansion im Verbrennungsraum verdampft bzw. sich verflüchtigt. Das brennbare Flüssiggasgemisch verbrennt im Verbrennungsraum, ohne daß feste Partikel zurückbleiben. Auf Filterstufen, die der mindestens einen Austrittsöffnung der Gasgenerator-Gehäusewand vorgelagert sind, kann bei Verwendung des erfindungsgemaßen Flüssiggasgemisches daher verzichtet werden. Sofern Filterstufen vorgesehen sind, dienen diese ausschließlich Kühlzwecken. Die Kühlung kann aber auch auf andere Weise erfolgen, indem etwa dem Verbrennungsraum ein Verteilerraum des Gehäuses nachgeschaltet ist, von dem aus die Verbrennungsgase über die mindestens eine Austrittsöffnung nach außen gelangen.

Erfindungsgemäß werden Gasgemische mit niedrigem Ladedruck vorgeschlagen, die beim Abbrand infolge Exothermie eine Volumenvervielfachung ergeben und keinerlei Filter benötigen. Zur Vermeidung von hohen Ladedrücken wird auf Sauerstoff oder Luft als Oxidationsmittel verzichtet. In Distickstoffmonoxid (Lachgas) liegt ein Gas vor, das sich leicht verflüssigen läßt (kritischer Druck: 72,7 bar, kritische Temperatur: 36,4°C). Die Oxidationskapazität ist doppelt so hoch wie die von Luft und im Gegensatz zu reinem Sauerstoff oder Luft verhält sich Lachgas bis mindestens 200°C als Inertgas, wodurch stille Oxidationsprozesse auch bei Hochtemperaturlagerung verhindert werden.

Vorzugsweise werden im Sinne der vorliegenden Erfindung kurzkettige Kohlenwasserstoffe eingesetzt, die ausgewählt sind aus Propan, n-Butan und i-Butan sowie deren Gemische. Ein besonders bevorzugter Kohlenwasserstoff im Sinne der vorliegenden Erfindung ist technisches Butan, das aus einem Gemisch von n-Butan und i-Butan besteht.

Die Zündfähigkeit der erfindungsgemäßen Gemische ist in einem weiten Bereich gegeben. Beispielsweise sind Gemische von 97,5 Gew.-% Distickstoffmonoxid und 2,5 Gew.-% Butan bis 70 Gew.-% Distickstoffmonoxid und 30 Gew.-% Butan ausserordentlich gut zündfähig. Die thermische Stabilität der erfindungsgemäßen Gemische erfüllt alle Anforderungen, die im Automobilbereich gestellt werden. Bei Zündversuchen mit einem Glühdraht erfolgt die Explosion der Gemische erst bei einer Drahttemperatur von mehr als 500°C.

Das Gewichtsverhältnis der Kohlenwasserstoffe zu Distickstoffmonoxid wird vorzugsweise derart eingestellt, daß nach der Reaktion ein nicht brennbares Gasgemisch entsteht. Dementsprechend sollte das Gewichtsverhältnis der Kohlenwasserstoffe zu Distickstoffmonoxid den stöchiometrischen Verhältnissen einer (möglichst) vollständigen Verbrennung des Kohlenwasserstoffe angepaßt sein. Vorteilhafterweise wird daher Distickstoffmonoxid in einem geringen Überschuß, bezogen auf den Kohlenwasserstoff, eingesetzt. Die Reaktionsprodukte bestehen dann im wesentlichen aus gasförmigen Stoffen (CO₂, H₂O und N₂ neben gegebenenfalls vorhandenen Restbestandteilen der Komponenten). Ein besonders geeignetes Mischungsverhältnis für die Komponenten Butan und Distickstoffmonoxid besteht in einem Gewichtsverhältnis von Butan zu Distickstoffmonoxid von 5 : 95 Gew.-Teilen. Distickstoffmonoxid fungiert hier als Sauerstoffgeber.

Für den Fall, daß es bei speziellen Anwendungen erforderlich sein sollte, vom stöchiometrischen Verhältnis abzuweichen, kann zur Reduzierung der Gasanteile eine katalytische Nachreaktion, beispielsweise mittels eines Katalysators aus einem geeigneten Stoff in Form eines Durchströmungssiebes, angebracht sein.

Die Umsetzungsgeschwindigkeit, insbesondere bei höheren Lademassen in Flüssiggasgeneratoren läßt sich überraschenderweise in weiten Grenzen durch Zusatz von Inertgasen, insbesondere physiologisch unbedenklichen Gasen mit geringem Eigendruck, steuern. Besonders bevorzugt ist daher das Inertgas ausgewählt aus Kohlendioxid und/oder Xenon. Die genannten Inertgase können vorzugsweise in einer Menge von 10 bis 80 Gew.-%, bezogen auf das Gemisch aus Kohlenwasserstoff und Distickstoffmonoxid, eingesetzt werden. Kohlendioxid läßt sich bekanntermaßen ebenso leicht wie Distickstoffmonoxid kondensieren (kritischer Druck: 73,8 bar, kritische Temperatur: 31,0°C). Das Inertgas, insbesondere das Kohlendioxid wirkt im Sinne der vorliegenden Erfindung als Reaktionsmoderator. Kohlendioxid hat dabei wesentlich günstigere Eigenschaften als beispielsweise Stickstoff und andere Inertgase, deren Anwendung jedoch nicht ausgeschlossen werden soll.

Erfindungsgemäß ist die Mischung aus 14 bis 87,75 Gew.-% Distickstoffmonoxid, 0,5 bis 27 Gew.-% Kohlenwasserstoff und 10 bis 80 Gew.-% Inertgas zusammengesetzt. Im einzelnen können beispielsweise folgende Zusammensetzungen erfindungsgemäß eingesetzt werden:

| **Zusammensetzung I:** | |
|---|---|
| Distickstoffmonoxid | 90 Gew.-% |
| Kohlenwasserstoff | 10 Gew.-% |

| **Zusammensetzung II:** | |
|---|---|
| Distickstoffmonoxid | 70 Gew.-% |
| Kohlenwasserstoff | 30 Gew.-% |

| **Zusammensetzung III:** | |
|---|---|
| Distickstoffmonoxid | 97,5 Gew.-% |
| Kohlenwasserstoff | 2,5 Gew.-% |

| **Zusammensetzung IV:** | |
|---|---|
| Distickstoffmonoxid | 14 Gew.-% |
| Kohlenwasserstoff | 6 Gew.-% |
| Inertgas | 80 Gew.-% |

| **Zusammensetzung V:** | |
|---|---|
| Distickstoffmonoxid | 59,4 Gew.-% |
| Kohlenwasserstoff | 6,6 Gew.-% |
| Inertgas | 34 Gew.-% |

| **Zusammensetzung VI:** | |
|---|---|
| Distickstoffmonoxid | 19,5 Gew.-% |
| Kohlenwasserstoff | 0,5 Gew.-% |
| Inertgas | 80 Gew.-% |

| **Zusammensetzung VII:** | |
|---|---|
| Distickstoffmonoxid | 87,75 Gew.-% |
| Kohlenwasserstoff | 2,25 Gew.-% |
| Inertgas | 10 Gew.-% |

| **Zusammensetzung VIII:** | |
|---|---|
| Distickstoffmonoxid | 63 Gew.-% |
| Kohlenwasserstoff | 27 Gew.-% |
| Inertgas | 10 Gew.-%. |

Diese Angaben sollen die Erfindung näher erläutern, ohne sie jedoch einzuschränken".

Die Explosionstemperatur der erfindungsgemäßen Gemische beträgt etwa 3000°C; somit tritt bei der Umsetzung eine Volumenpotenzierung ein. Die Anpassung der Kinetik an das jeweilige Airbag-System kann durch Variation der Menge des Reaktionsmoderators, insbesondere der Menge an Kohlendioxid, eingestellt werden.

Die nachfolgend beschriebenen Versuche belegen die Einsetzbarkeit der erfindungsgemäßen Gemische.

### Beispiel 1

In einer handelsüblichen Distickstoffmonoxid-Patrone mit 10 ml Inhalt, beispielsweise für Sahnebereiter geeignet, werden nach dem Ablassen des Distickstoffmonoxids 2,5 g einer Mischung aus 90 Gew.-% Distickstoffmonoxid und 10 Gew.-% Butan einkondensiert. Dieses Gemisch wurde durch eine Anzündladung, beispielsweise durch einen explodierenden Draht entzündet. Bedingt durch die hohe Explosionstemperatur tritt eine Volumenpotenzierung auf. Das sich entwickelnde Gas ist beispielsweise zur Füllung eines Airbag geeignet.

### Beispiel 2

Dieses Beispiel soll die Stabilität der erfindungsgemäßen Mischungen demonstrieren. Eine handelsübliche Sprengkapsel Nr. 8, die an der gemäß Beispiel 1 gefüllten Patrone angebracht wurde, perforierte die Patronenwand und zündete das Gemisch, wobei die Patrone in kleine Stücke zerlegt wurde. Eine Füllung aus Distickstoffmonoxid allein zerlegte beim Ansprengen die Patrone nicht. Legte man eine Lage handelsüblichen Isolierbands um die Patrone und setzte dann die Sprengkapsel auf, so wurde die Patronenwand nur stark eingedrückt, jedoch nicht perforiert und das Gasgemisch zündete nicht. Es überstand somit sogar den Detonationsstoß einer Sprengkapsel.

### Beispiel 3:

Ein Gemisch aus 66 Gew.-% Distickstoffmonoxid-Butan (techn.) im Verhältnis von 90 Gew.-Teilen Distickstoffmonoxid zu 10 Gew.-Teilen Butan (59,4 Gew.-% Distickstoffmonoxid und 6,6 Gew.-% Butan) und 34 Gew.-% Kohlendioxid zeigt bei einer Ladedichte von 0,5 g/ml bei 70°C einen Druck von 110 bar und bei der maximal geforderten Temperatur von 110°C einen Druck von 180 bar. Dieses Gemisch wurde durch eine Anzündladung, beispielsweise durch einen explodierenden Draht entzündet. Bedingt durch die hohe Explosionstemperatur trat eine Volumenpotenzierung auf. Die Mischung erfüllt beim Abbrand den für Airbag-Generatoren geforderten Druck-Zeit-Verlauf. Beim Ansprengen einer so gefüllten Patrone mit 2,5 g Lademasse unter Verwendung einer Sprengkapsel Nr. 8 trat keine Zerlegung der Patrone in Bruckstücke auf.

## Patentansprüche

1. Gasentwickelndes Material für einen Gasgenerator, dadurch gekennzeichnet, daß es aus einer Flüssiggasmischung besteht, wobei die Flüssiggaskomponenten ausgewählt sind aus einem oder mehreren kurzkettigen Kohlenwasserstoffen und Distickstoffmonoxid.

2. Gasentwickelndes Material nach Anspruch 1, dadurch gekennzeichnet, daß die Kohlenwasserstoffe ausgewählt sind aus Propan, n-Butan und i-Butan und deren Gemischen.

3. Gasentwickelndes Material nach Anspruch 1, dadurch gekennzeichnet, daß der Kohlenwasserstoff technisches Butan ist.

4. Gasentwickelndes Material nach einem oder mehreren der Ansprüche 1 bis 3, dadurch gekennzeichnet, daß das Gewichtsverhältnis von Kohlenwasserstoff zu Distickstoffmonoxid im Bereich von 70 bis 97,5 Gew.-% Distickstoffmonoxid, bezogen auf das Gemisch, eingestellt ist.

5. Gasentwickelndes Material nach einem oder mehreren der Ansprüche 1 bis 4, dadurch gekennzeichnet, daß das Gewichtsverhältnis von Kohlenwasserstoff zu Distickstoffmonoxid den stöchiometrischen Verhältnissen einer vollständigen Verbrennung des Kohlenwasserstoffs angepaßt ist.

6. Gasentwickelndes Material nach einem oder mehreren der Ansprüche 1 bis 5, dadurch gekennzeichnet, daß das Gewichtsverhältnis von Butan zu Distickstoffmonoxid 5 : 95 Gew.-Teile beträgt.

7. Gasentwickelndes Material nach einem oder mehreren der Ansprüche 1 bis 6, dadurch gekennzeichnet, daß das Flüssiggasgemisch neben Kohlenwasserstoffen und Distickstoffmonoxid weiterhin ein Inertgas, insbesondere mit geringem Eigendruck, enthält.

8. Gasentwickelndes Material nach Anspruch 7, dadurch gekennzeichnet, daß das Inertgas Kohlendioxid und/oder Xenon, insbesondere in einer Menge von 10 bis 80 Gew.-%, bezogen auf das Gemisch aus Kohlenwasserstoffen und Distickstoffmonoxid, ist.

9. Verwendung des gasentwickelnden Materials gemäß einem der Ansprüche 1 bis 8 in einem Gasgenerator für aufblasbare Aufprallkissen.

## Claims

1. Gas developing material for a gas generator, **characterised in that** it consists of a liquid gas mixture, with the liquid gas components being chosen from one or several short chain hydrocarbons and nitrogen monoxide.

2. Gas developing material according to claim 1, **characterised in that** the hydrocarbons are chosen from propane, n-butane and i-butane and mixtures thereof.

3. Gas developing material-according to claim 1, **characterised in that** the hydrocarbon is industrial butane.

4. Gas developing material according to one or several of claims 1 to 3, **characterised in that** the weight ratio of hydrocarbon to dinitrogen monoxide is set to be in the range of 70 to 97.5 % by weight dinitrogen monoxide, related to the mixture.

5. Gas developing material according to one or several of claims 1 to 4, **characterised in that** the weight ratio of hydrocarbon to dinitrogen monoxide is matched to the stoichiometric ratios for a complete combustion of the hydrocarbon.

6. Gas developing material according to one or several of claims 1 to 5, **characterised in that** the weight ratio of butane to dinitrogen monoxide amounts to 5 : 95 parts by weight.

7. Gas developing material according to one of several of claims 1 to 6, **characterised in that** the liquid gas mixture contains, besides hydrocarbons and dinitrogen monoxides, furthermore an inert gas, more particular with low intrinsic pressure.

8. Gas developing material according to claim 7, **characterised in that** the inert gas is carbon dioxide and/or xenon, in particular in an amount of 10 to 80 % by weight, related to the mixture of hydrocarbons and dinitrogen monoxide.

9. Use of the gas developing material according to one of claim 1 to 8 in a gas generator for inflatable cushions.

## Revendications

1. Matière dégageant un gaz, destinée à un générateur de gaz, caractérisée en ce qu'elle est constituée d'un mélange de gaz liquéfiés dont les composants gazeux liquéfiés sont choisis parmi du protoxyde d'azote et un ou plusieurs hydrocarbures à courte chaîne.

2. Matière dégageant un gaz, conforme à la revendication 1, caractérisée en ce que les hydrocarbures sont choisis parmi le propane, le n-butane et l'i-butane et leurs mélanges.

3. Matière dégageant un gaz, conforme à la revendication 1, caractérisée en ce que l'hydrocarbure est du butane technique.

4. Matière dégageant un gaz, conforme à l'une ou à plusieurs des revendications 1 à 3, caractérisée en ce que les proportions d'hydrocarbures et de protoxyde d'azote se situent dans l'intervalle allant de 70 à 97,5 % en poids de protoxyde d'azote, par rapport au mélange.

5. Matière dégageant un gaz, conforme à l'une ou à plusieurs des revendications 1 à 4, caractérisée en ce que les proportions d'hydrocarbures et de protoxyde d'azote sont ajustées au rapport stoechiométrique correspondant à la combustion complète des hydrocarbures.

6. Matière dégageant un gaz, conforme à l'une ou à plusieurs des revendications 1 à 5, caractérisée en ce que le rapport pondéral du butane au protoxyde d'azote vaut 5/95, en parties en poids.

7. Matière dégageant un gaz, conforme à l'une ou à plusieurs des revendications 1 à 6, caractérisée en ce que le mélange de gaz liquéfiés contient, en plus des hydrocarbures et du protoxyde d'azote, un gaz inerte, en particulier sous une faible pression propre.

8. Matière dégageant un gaz, conforme à la revendication 7, caractérisée en ce que le gaz inerte est du dioxyde de carbone et/ou du xénon, en particulier en une proportion de 10 à 80 % en poids, par rapport au poids des hydrocarbures et du protoxyde d'azote.

9. Utilisation d'une matière dégageant un gaz, conforme à l'une des revendications 1 à 8, dans un générateur de gaz destiné à des coussins gonflables de sécurité.
